# EUROPEAN PATENT SPECIFICATION

(11) **EP 2 328 840 B1**
(45) Date of publication and mention of the grant of the patent: **23.01.2019**
(21) Application number: 09813451.3
(22) Date of filing: 28.08.2009
(51) Int. Cl.: C01F 7/00

(54) **CORUNDUM CRYSTAL STRUCTURE PIGMENTS WITH REDUCED SOLUBLE CHROMIUM CONTENT**
KORUNDKRISTALLSTRUKTURPIGMENTE MIT REDUZIERTEM ANTEIL AN LÖSLICHEM CHROM
PIGMENTS À STRUCTURE CRISTALLINE DU CORINDON À TENEUR RÉDUITE EN CHROME SOLUBLE

(30) Priority: 15.09.2008 US 210453
(43) Date of publication of application: 08.06.2011
(73) Proprietor: Ferro Corporation, Mayfield Heights, OH 44124 (US)
(72) Inventor: DETRIE, Terry, J., Washington PA 15301 (US); BARNES, Raymond, E., Wadsworth OH 44281 (US); LIVINGSTON, Jacqueline, C., Washington PA 15301 (US); NUCCETELLI, Gary, L., Scenery Hill PA 15360 (US); PIPOLY, Richard, A., Garfield Heights OH 44125 (US); SWILER, Daniel, R., Washington PA 15301 (US); WANG, Lei, Washington PA 15301 (US)
(74) Representative: Ganahl, Bernhard
(86) International application number: PCT/US2009/055283
(87) International publication number: WO 2010/030518

(56) References cited:
- WO-A2-2008/014309
- US-A- 5 219 807
- US-B2- 6 454 848
- US-B2- 7 014 701

## Description

### BACKGROUND OF THE INVENTION

The presently disclosed embodiments are directed to the field of reducing soluble chromium in pigments, and particularly, chromium-containing pigments having a corundum crystal structure.

Chromium is a transition metal that acts as a chromophore for a wide variety of pigments. Unfortunately, in many of these chromium-containing pigments not all of the chromium is completely bound to the crystal. When such pigments are added to an aqueous solution, some soluble chromium (usually as Cr⁶⁺) is released. Hexavalent chromium has been identified as a serious health hazard and is environmentally undesirable. Government regulations on hexavalent chromium are constantly becoming more restrictive. Pigments that are known to have high soluble chromium can be washed at the manufacturing site, yielding a relatively low soluble chromium pigment. However, the water containing the extracted chromium must then be treated. Although costly, this is still desirable over releasing hexavalent chromium to the environment.

A better solution is to modify the pigment formula such that the chromium in the resulting pigment is not prone to release into the environment. An example of this was provided in US Patent 7,014,701 to Stewart et al. In that patent, it was noted that Co(CrAl)₂O₄ spinel pigments (C.l. Blue 36) can have very high chromium release. The addition of phosphate phases such as aluminum orthophosphate [AlPO₄], aluminum metaphosphate [Al(PO₃)₃], or ammonium dihydrogen phosphate [NH₄H₂PO₃] were found to reduce soluble chromium. In examples 5 and 7 of that patent, the addition of 1% aluminum metaphosphate reduced the soluble chromium (measured by British Toy method) from 336 ppm to 81 ppm. Although satisfactory in many respects, a need remains for further advances in reducing the potential release of soluble chromium from chromium-containing pigments. US5219807 discloses the reduction of soluble chrome in a fired ceramic refractory by mixing an additive with precursor material and firing the mixture.

### SUMMARY OF THE INVENTION

The difficulties and drawbacks associated with previous strategies are overcome in the present method for reducing soluble chromium from pigments.

In a first aspect, the present invention provides a method of reducing the amount of soluble chromium from chromium-containing pigments having a corundum crystal structure. The method comprises adding an effective amount of an additive to a chromium-containing pigment having a corundum crystal structure. The additive is selected from the group consisting of aluminum metaphosphate, tungstic acid, and mono-ammonium phosphate. The method also comprises heating the additive and pigment to a temperature in the range of from about 750°C to about 1300°C.

In another aspect, the present invention provides a method of reducing the amount of soluble chromium from chromium-containing pigments having a corundum crystal structure. The method comprises adding an effective amount of an additive to a chromium-containing pigment having a corundum crystal structure, in which the additive is selected from the group consisting of aluminum metaphosphate, tungstic acid, and mono-ammonium phosphate. The method also comprises heating the additive and pigment to a temperature in the range of from about 750°C to about 1300°C. And, the method comprises subjecting the pigment to a size reducing operation.

In yet another aspect, the present invention provides a method of reducing the amount of soluble chromium from chromium-containing pigments having a corundum crystal structure. The method comprises adding an effective amount of an additive to a chromium-containing pigment having a corundum crystal structure. The additive is selected from the group consisting of aluminum metaphosphate, tungstic acid, and mono-ammonium phosphate. The method also comprises mixing the additive and the pigment. The method further comprises heating the additive and pigment to a temperature in the range of from about 750°C to about 1300°C. And, the method additionally comprises subjecting the pigment to a size reducing operation.

As will be realized, the invention is capable of other and different embodiments and its several details are capable of modifications in various respects, all without departing from the invention. Accordingly, the description is to be regarded as illustrative and not restrictive.

### DETAILED DESCRIPTION OF THE DRAWINGS

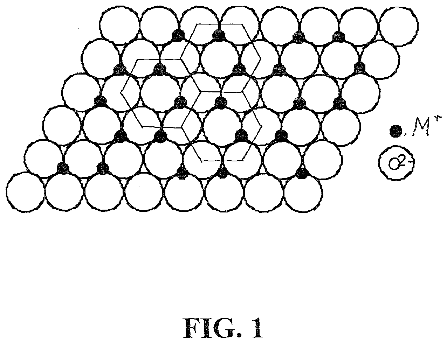

Figure 1 is a schematic illustration of a corundum crystal structure.

### DETAILED DESCRIPTION OF THE EMBODIMENTS

The present invention provides a strategy for reducing soluble chromium in pigments having a corundum crystal structure by use of certain additives and/or mineralizers. The term "chrome green" may also be used to refer to a pigment comprised of chromium oxide used in pigmentary applications. The teachings of the present invention are applicable to chrome green pigments that display a corundum crystal structure. Virtually any inorganic pigment containing chromium and having the corundum crystalline structure can be formed in accordance with the present invention so that the potential for release of soluble chromium is significantly reduced. The term "chromium-containing pigments" is used herein to refer to any pigment comprising chromium ion.

Before turning attention to the preferred embodiments, it is instructive to consider what is meant by a corundum crystal structure. Corundum lattices are restricted to compounds with the generic stoichiometry M₂O₃. These compounds are also called sesquioxides. The cation valence is always 3+. The basic feature of this lattice are the large O²⁻ ions, which form an hcp structure. An hcp structure, or hexagonal close packing structure, utilizes layers of atoms packed so that atoms in alternating layers overlie one another. Figure 1 shows one basal plane of the corundum lattice viewed along a transverse axis. The superimposed hexagons highlight this familiar pattern. Placement of the M³⁺ ions in this plane can be viewed in two ways. First, the cations occupy two-thirds of the interstices in the close-packed O²⁻ plane; second, the cations form a hexagonal basal plane of the graphite structure.

The hexagons drawn in Fig. 1 can be regarded as two-dimensional unit cells of the corundum structure. Each hexagon contains two M³⁺ cations entirely within its boundary. Each of the six anions that form the periphery of the hexagons are shared among three such units so that two peripheral O²⁻ are assigned to each hexagon. Together with the central anion, the planar unit cell contains three oxygen ions. The stoichometry of the crystal is thus M₂O₃ as required.

The complete three-dimensional unit cell corundum contains six close-packed O²⁻ planes arranged in the stacking sequence of the hcp lattice. Each of these planes is differentiated by the placement of the pairs of cations, which occupy sequentially the six possible adjoining interstitial positions in the hexagon of anions.

In addition to Al₂O₃, the corrosion products of steel, Cr₂O₃ and Fe₂O₃, exhibit the corundum lattice structure. In their pure states, the rare-earth products of uranium fission in UO₂ (La₂O₃, Nd₂O₃, etc), also form this crystal structure. Another representative compound having the corundum crystal structure is Rh₂O₃. The mineral corundum, α-Al₂O₃, is probably the most important of all compounds which adopt this structure type. Not only is α-Al₂O₃ used for its hardness, it is also the host structure for sapphires (the blue color comes from the presence of Fe and Ti impurities) and rubies (the red color comes from the presence of Cr impurities).

Frequently, in the art, hematite pigments are equated with a corundum crystal structure. The term "hematite pigments" refers to pigments comprising iron (III) oxide, such as Fe₂O₃. Certain hematite pigments are known that also comprise iron (III) oxide, such as the family of pigments known as Green 17. Thus, although the term hematite as used in the art, is generally interchangeable with the term corundum, it will be appreciated that the term hematite denotes a class of pigments comprising iron (III) oxide, which in turn has the corundum crystal structure.

Frequently, in the art, chromium (III) oxide, or chrome green pigments, with the mineral name eskolaite are also equated with a corundum crystal structure. Eskolaite is the chromium analogue of corundum and hematite and the teachings of the present invention are applicable to such eskolaite pigments.

In accordance with the present invention, various additives or mineralizers have been discovered, that when used during pigment production, result in significantly reduced levels of soluble chromium in the resulting pigment. The term "mineralizer" as will be appreciated by those skilled in the art, refers to agents that facilitate a reaction without being part of the desired product. High levels of leachable chromium have been observed in the various pigment families, and particularly those having a corundum crystal structure such as chromium green-black hematite (C.l. Pigments Green 17), and iron brown hematite (Red 101 and Red 102). Each pigment family responds differently to different additives, but generally the following have been discovered to be effective in reducing soluble chromium: aluminum metaphosphate [Al(PO₃)₃], aluminum fluoride [Al₂F₆·3H₂O], tungsten oxide [WO₃], tungstic acid [H₂WO₄], and mono-ammonium phosphate (MAP) [NH₄H₂PO₄].

In addition to adding one of the preferred additives to one or more pigments to reduce the potential for release of soluble chromium from the pigment(s), the present invention includes the addition of two or more of the noted preferred additives to one or more pigments. Additionally, other additives that have been previously included in corundum pigments such as boric acid [H₃BO₃] and molybdenum oxide [MoO₃] may also be added along with the preferred additives.

The present invention also has application to pigments comprising chromium, in which the chromium ion or a portion of the amount of such ions, is not part of the corundum crystal structure. That is, it is contemplated that pigments comprising materials having a corundum crystal structure and which also comprise soluble chromium can be treated in accordance with the present invention to remove or at least significantly reduce the amount of soluble chromium in the resulting pigment. As will be appreciated by those skilled in the art, chromium ions can exist in a corundum structure such as in pure Cr₂O₃ or as dopants. The present invention includes any pigment having a corundum structure which comprises chromium ions as components in the lattice structure or as dopant(s). Moreover, it is contemplated that the present application may also have utility with regard to other chromium-containing pigments comprising materials with a corundum crystal structure and ancillary materials with other crystal structures besides a corundum structure.

As previously described, there are many chromium-bearing pigments that can potentially release significant amounts of Chromium (VI) into the environment. In a preferred aspect, the additives can be added to these pigments in an amount of from about 0.1 wt% to about 5 wt% and most preferably from about 0.2 wt% to about 2 wt%, based upon the weight of the pigment. However, the present invention includes the use of greater or lesser amounts.

In accordance with a preferred embodiment process according to the present invention, one or more pigments having a potential to release chromium (VI), are combined with an effective amount of the preferred additives or mineralizers described herein. The pigment(s) are mixed or otherwise dispersed with one or more of the additives. Preferably, the pigment(s) are dry blended with the one or more additives. The mixture is then fired in air at a temperature of from about 750° to about 1300°, and preferably from about 800° to about 1100°. Firing times may range from about 0.1 to about 24 hours, and preferably from about 2 to about 12 hours, however the present invention includes times less than or greater than these periods. After firing, the pigment(s) may optionally be subjected to one or more sizing operations. Examples of such sizing operations include milling, and specifically, air milling. Air milling refers to all milling techniques where the milling process includes the acceleration of particles using pressurized gas. Depending upon the application or desired end use, representative average particle sizes for the fired pigment range from about 0.5 µm to about 2.5 µm and preferably from about 0.7 µm to about 1.5 µm.

Although not wishing to be bound to any particular theory, it is believed that certain preferred embodiment additives, after being mixed or otherwise dispersed with the pigment(s) of interest and heated, provide a fluid phase between pigment particles. The fluid phase provides a medium for reactions. The existence of a fluid phase for such reactions likely facilitates reactions involving ion transfers to or from the pigments, particularly as compared to a solid-state process. The stable states for chromium ions are Cr³⁺ or Cr⁶⁺. Chemistry and processing conditions influence the balance between the two. The preferred embodiment additives described herein push the balance firmly to Cr³⁺. It is desirable to intimately mix the mineralizer with the other raw material components prior to firing. As for fine particle size, if the mineralizer was acting on a liquid phase or vapor phase transport mechanism, then particle size is not critical. If the transport mechanism is solid-state, then a fine particle size would be desirable.

The following examples are presented to further illustrate aspects of the preferred embodiments of the present invention. In the examples a Horiba model LA910 particle size analyzer was utilized to determine particles size and samples were dispersed in water using ultrasound to promote dispersion of the particles.
**Example I,** Green 17: a green pigment of the following composition was evaluated: 92.5 wt% Cr₂O₃, 6.0 wt% Al(OH)₃, 1.0 wt% Fe₂O₃, 0.5 wt% TiO₂. To this composition was added one of the following mineralizers: 1.0 wt% Al(PO₃)₃, 1.0 wt% Al₂F₆·3H₂O, or 0.5 wt% WO₃. The tests for soluble chromium by the TLCP method by using aluminium fluoride or tungsten oxide are comparative tests and are not part of the invention. The raw components were mixed in an Oster blender for 2 minutes. The raw materials were put into a cordierite crucible and fired in air at 1100°C. The particle size of the resulting green pigment was reduced to an average particle size of approximately 1.5 µm via air milling. The pigments were then tested for soluble chromium by the TCLP method. The soluble chromium results are listed in Table 1. The TCLP method, or Toxicity Characteristic Leaching Procedure is designed to determine the mobility of both organic and inorganic analytes present in liquid, solid, and multiphasic wastes. This is usually used to determine if a waste may meet the definition of EP Toxicity, that is, carrying a hazardous waste code under RCRA, 40 CFR Part 261.
**Example 2,** Green 17: a brown pigment of the following composition was evaluated: 21.4 wt% Cr₂O₃, 78.2 wt% FeOOH and 0.4 wt% MnCO₃. This composition has been blended and pulverized. To equal portions of this composition was added one of the mineralizers: 0.5 wt% Al(PO₃)₃, 0.5 wt% Al₂F₆·3H₂O, or 0.5 wt% WO₃. The tests for soluble chromium by the TLCP method by using aluminium fluoride or tungsten oxide are comparative tests and are not part of the invention.Then, that new mixture of raw components with the additive was mixed in an Oster blender for 2 minutes. The raw materials were placed into a cordierite crucible and fired in air at 804°C. The particle size of the resulting brown pigment was reduced to less than 0.7 µm via air milling. The pigments were then tested for soluble chromium by the TCLP method. The soluble chromium results are listed in Table 1.
**Example 3**, Green 17: a black pigment of the following composition was evaluated: 47wt% Cr₂O₃, 53 wt% FeOOH. To this composition was added one of the following mineralizers: 1 wt% Al(PO₃)₃, 1 wt% Al₂F₆·3H₂O, 1 wt% WO₃, or 1 wt% H₂WO₄. The tests for soluble chromium by the TLCP method by using aluminium fluoride or tungsten oxide are comparative tests and are not part of the invention.The raw components were mixed in an Oster blender for 2 minutes. The raw materials were put into a cordierite crucible and fired in air at 927°C. The particle size of the resulting black pigment was reduced to an average particle size of about 0.7 µm via air milling. The pigments were then tested for soluble chromium by the TCLP method. The soluble chromium results are listed in Table 1.
**Example 4,** a sample of pigmentary chromium oxide green was calcined at 1093°C. To this composition was added one of the following mineralizers: 1.2 wt%, Al(PO₃)₃, and 2 wt% MAP.

**Table 1 -Preferred Embodiment Additives**

| Example | TCLP Soluble Chromium (ppm) from the following additives | | | | | | |
|---|---|---|---|---|---|---|---|
| | None | Al(PO₃)₃ | Al₂F₆·3H₂O | WO₃ | H₂WO₄ | MAP | |
| 1 | 12.1 | 3.0 | 11.5 | 5.7 | - | - | |
| 2 | 19.7 | 8.1 | 27.5 | 23.5 | - | - | |
| 3 | 31.9 | 2.6 | 28.5 | 5.1 | 5.5 | - | |
| 4 | 844 | 79.7 | - | - | - | 82.5 | |

Table 1 illustrates the significant reductions in release of soluble chromium from the pigments referenced in Examples 1-4. In many instances, use of the additives resulted in a ten-fold reduction of soluble chromium.

As previously noted, a common practice for reducing soluble chromium is to wash the pigment. Typically, the pigment is charged into a mill with ceramic media and water. The mill can be used to grind the pigment to the desired particle size or, if the desired particle size has already been achieved by a dry method, a short residence time (about 30 minutes) can be used. The pigment slurry is discharged from the mill and filtered with excess water (typically about 10 times the weight of pigment) to wash away the soluble chromium. The pigment is then dried and dispersed through a hammer mill. The wash water is then chemically treated to precipitate the aqueous chromium. This wet process is significantly more expensive than the preferred embodiment dry process. And so, in comparison, use of the preferred embodiment process can result in significant cost savings while undertaking desirable environmental and safety measures.

In certain instances, the preferred embodiment additives also provide a superior color. The preferred embodiment additives may also provide improved stability.

Many other benefits will no doubt become apparent from future application and development of this technology.

As described hereinabove, the present invention solves many problems associated with previous type devices. However, it will be appreciated that various changes in the details, materials and arrangements of parts, which have been herein described and illustrated in order to explain the nature of the invention, may be made by those skilled in the art without departing from the principle and scope of the invention, as expressed in the appended claims.

## Claims

1. A method of reducing the amount of soluble chromium from chromium-containing pigments having a corundum crystal structure, the method comprising:
adding an effective amount of an additive to a chromium-containing pigment having a corundum crystal structure, the additive selected from the group consisting of aluminum metaphosphate, tungstic acid, and mono-ammonium phosphate;
heating the additive and pigment to a temperature in the range of from 750°C to 1300°C.

2. The method of claim 1 further comprising:
after heating, subjecting the pigment to a size reducing operation, preferably the size reducing operation is milling.

3. The method of claim 2 wherein boric acid is also added to the pigment and wherein after subjecting the pigment to the size reducing operation, the pigment has an average particle size of from 0.5 µm to 2.5 µm, and preferably an average particle size of from 0.7 µm to 1.5 µm.

4. The method of claim 1 wherein heating is performed to a temperature of from 800°C to 1100°C.

5. The method of claim 1 further comprising:
prior to heating the additive and pigment, mixing the additive and pigment.

6. The method of claim 1 wherein the effective amount of additive added to the pigment is from 0.1 wt% to 5 wt% based upon the weight of the pigment.

7. The method of claim 1 wherein the pigment having a corundum crystal structure is selected from (i) chromium green-black hematite, (ii) iron brown hematite, and (iii) combinations thereof.

8. The method of claim 1, wherein the soluble chromium is chromium (VI).

## Patentansprüche

1. Verfahren zur Verringerung der Menge an löslichem Chrom aus chromhaltigen Pigmenten mit einer Korundkristallstruktur, wobei das Verfahren umfasst:
Zugabe einer wirksamen Menge eines Additivs zu einem chromhaltigen Pigment mit einer Korundkristallstruktur, wobei das Additiv ausgewählt ist aus der Gruppe bestehend aus Aluminiummetaphosphat, Wolframsäure und Monoammoniumphosphat;
Erhitzen des Additivs und des Pigments auf eine Temperatur im Bereich von 750 °C bis 1300 °C.

2. Verfahren gemäß Anspruch 1, ferner umfassend:
Nach Erhitzen das Pigment einer Größenverminderungsoperation unterziehen, wobei die Größenverminderungsoperation bevorzugt Mahlen ist.

3. Verfahren gemäß Anspruch 2, wobei Borsäure ebenfalls zu dem Pigment zugegeben wird und wobei das Pigment nach dem der Größenverminderungsoperation unterziehen des Pigments eine durchschnittliche Teilchengröße von 0,5 µm bis 2,5 µm, und bevorzugt eine durchschnittliche Teilchengröße von 0,7 µm bis 1,5 µm aufweist.

4. Verfahren gemäß Anspruch 1, wobei das Erwärmen auf eine Temperatur von etwa 800 °C bis 1100° C durchgeführt wird.

5. Verfahren gemäß Anspruch 1, ferner umfassend:
Vor dem Erhitzen des Additivs und des Pigments Mischen des Additivs und des Pigments.

6. Verfahren gemäß Anspruch 1, wobei die wirksame Menge an Additiv, die dem Pigment zugesetzt wird, von 0,1 Gew .-% bis 5 Gew .-%, bezogen auf das Gewicht des Pigments, beträgt.

7. Verfahren nach Anspruch 1, wobei das Pigment mit einer Korundkristallstruktur ausgewählt ist aus (i) chromgrün-schwarzem Hämatit, (ii) eisenbraunem Hämatit und (iii) Kombinationen davon.

8. Verfahren gemäß Anspruch 1, wobei das lösliche Chrom Chrom (VI) ist.

## Revendications

1. Un procédé de réduction de la quantité de chrome soluble à partir de pigments contenant du chrome ayant une structure cristalline de corindon, le procédé comprenant:
l'addition d'une quantité efficace d'un additif à un pigment contenant du chrome ayant une structure cristalline de corindon, l'additif choisi parmi le groupe constitué de métaphosphate d'aluminium, d'acide tungstique et de phosphate de monoammonium;
le chauffage de l'additif et du pigment à une température de 750 °C à 1300 °C.

2. Le procédé selon la revendication 1, comprenant en outre:
après chauffage, la soumission du pigment à une opération de réduction de la taille, l'opération de réduction de la taille préférablement étant le broyage.

3. Le procédé selon la revendication 2, dans lequel de l'acide borique est également ajouté au pigment et dans lequel, après soumission du le pigment à l'opération de réduction de taille, le pigment a une taille de particule moyenne de 0,5 µm à 2,5 µm, préférablement une taille de particule moyenne de 0,7 µm à 1,5 µm.

4. Le procédé selon la revendication 1, dans lequel le chauffage est effectué à une température de 800 °C à 1100 °C.

5. Le procédé selon la revendication 1, comprenant en outre :
avant le chauffage de l'additif et du pigment, le mélange de l'additif et du pigment.

6. Le procédé selon la revendication 1, dans lequel le la quantité effective d'additif ajouté au pigment et dans la plage allant de 0,1 % en poids à 5 % en poids sur la base du poids du pigment.

7. Le procédé selon la revendication 1, dans lequel le pigment ayant une structure cristalline de corindon est choisi parmi (i) l'hématite noir-chrome-noir, (ii) l'hématite brun-fer et (iii) leurs combinaisons.

8. Le procédé selon la revendication 1, dans lequel le chrome soluble est le chrome (VI).
